# EUROPÄISCHE PATENTSCHRIFT

(11) **EP 3 617 044 B1**
(45) Veröffentlichungstag und Bekanntmachung des Hinweises auf die Patenterteilung: **17.07.2024**
(21) Anmeldenummer: 19192991.8
(22) Anmeldetag: 22.08.2019
(51) Int. Cl.: B62D 33/02, B60D 1/02, B62D 25/08, B62D 33/06

(54) **FAHRERHAUS MIT MINDESTENS EINER ABSCHLEPPVORRICHTUNG**
DRIVERS CAB WITH AT LEAST ONE TOWING DEVICE
CABINE DE CONDUCTEUR DOTÉE D'AU MOINS UN DISPOSITIF DE REMORQUAGE

(30) Priorität: 30.08.2018 DE 102018121213
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Kondic, Darko, 85757 Karlsfeld (DE); Möller, Andreas, 36145 Hofbieber (DE)
(74) Vertreter: v. Bezold & Partner Patentanwälte - PartG mbB

(56) Entgegenhaltungen:
- EP-B1- 1 637 438
- WO-A1-2006/071160
- DE-A1- 102004 051 954
- DE-B4- 102004 051 954
- DE-U1- 202015 105 094
- US-A- 6 029 750
- US-A1- 2004 119 276
- US-A1- 2015 129 335

## Beschreibung

Die Erfindung betrifft ein Fahrerhaus für ein Nutzfahrzeug, vorzugsweise einen Lastkraftwagen, mit einer Fahrerhaustragstruktur und mindestens einer Abschleppvorrichtung.

Nutzfahrzeuge, wie z. B. Lastkraftwagen, können an einer Vorderseite eine Abschleppvorrichtung aufweisen, um das Nutzfahrzeug im Bedarfsfall abschleppen zu können. Herkömmlich befindet sich die Abschleppvorrichtung an Bauteilen, die am Rahmen oder über Montagebauteile am Rahmen angebunden sind. Durch die großen auftretenden Kräfte sind hierfür massive kraftübertragende Komponenten erforderlich. Die üblicherweise federnd gelagerten Fahrerhäuser bei Lastkraftwagen sind nicht in den Kraftfluss der Abschleppvorrichtung eingebunden.

Herkömmliche Abschleppvorrichtung sind beispielsweise aus der EP 0 940 272 A1 und der EP 1 637 438 A2 bekannt.

Die US 6 029 750 A offenbart ein Fahrzeug zur Brandbekämpfung in abgelegenen Gebieten. Das Fahrzeug kann mit einer Seilwinde ausgestattet sein. Die US 2015/129335 A1 offenbart ein stapelbares mobiles Plattformfahrzeug mit einer Winde, die am Aufbau des Fahrzeugs montiert oder befestigt ist.

Die DE 10 2004 051954 A1 offenbart eine Anhängerkupplungsvorrichtung für ein selbsttragendes Aufbauskelett eines Omnibusses, wobei das Aufbauskelett mindestens einen Hinterachsträger und einen Gitterrahmen mit einer Anhängerkupplung an einem zentralen Kraftübertragungspunkt aufweist.

Die US 2004/119276 A1 betrifft ein Fahrgestell für ein vierrädriges Straßenfahrzeug mit einer ebenen Plattform, die aus einer Sandwichstruktur besteht, einem vorderen rohrförmigen Rahmen, einem hinteren rohrförmigen Rahmen und vier linearen Dämpfern, die starr und ortsfest an den Rahmen befestigt sind.

Der Erfindung liegt die Aufgabe zu Grunde, ein alternatives und/oder verbessertes Nutzfahrzeug mit Abschleppvorrichtung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung betrifft ein Fahrerhaus für ein Nutzfahrzeug, vorzugsweise einen Lastkraftwagen. Das Fahrerhaus weist eine (z. B. metallische und/oder aus Metallprofilen und/oder-blechen gebildete) Fahrerhaustragstruktur (z. B. Fahrerhauskabinentragstruktur) auf, die zumindest teilweise einen Rohbau des Fahrerhauses bildet. Das Fahrerhaus weist mindestens eine Abschleppvorrichtung, die in die Fahrerhaustragstruktur (vorzugsweise direkt) integriert (zum Beispiel eingebaut, eingeklebt, eingeschweißt, eingeschraubt und/oder eingefügt) ist, auf, vorzugsweise an einer Vorderseite der Fahrerhaustragstruktur.

In der vorliegenden Erfindung kann die Abschleppvorrichtung direkt in die Fahrerhaustragstruktur integriert sein. Hierdurch werden zusätzliche Komponenten zur Anbindung, die zusätzlichen Bauraum benötigen und zusätzliches Gewicht erzeugen, eingespart. Die Krafteinleitung von der Abschleppeinrichtung erfolgt direkt in die Fahrerhaustragstruktur. Ferner kann die Integration der Abschleppvorrichtung in die Fahrerhaustragstruktur auch den Aufbau eines Nutzfahrzeugs mit einer niedrigen, hinsichtlich des Einstiegs optimierten Anordnung des Fahrerhauses ermöglichen. Ein derartiges Nutzfahrzeug kann beispielsweise ohne einen unter der Fahrerhaustragstruktur angeordneten Leiterrahmen und/oder ohne eine unter dem Fahrerhaus angeordneten Verbrennungskraftmaschine vorgesehen sein, um einen geringen Bodenabstand zwischen Fahrerhaus (-tragstruktur) und Boden zu ermöglichen. Die Integration der Abschleppvorrichtung in die Fahrerhaustragstruktur kann z. B. dadurch ermöglicht werden, dass die Fahrerhaustragstruktur starr und beispielsweise rückseitig an einen Fahrzeughauptrahmen (z. B. Leiterrahmen) des Nutzfahrzeugs angebunden ist.

In einem weiteren Ausführungsbeispiel ist die mindestens eine Abschleppvorrichtung in einer Querträgerkonstruktion (zum Beispiel offenes oder geschlossenes Querprofil, zum Beispiel Metallprofil) der Fahrerhaustragstruktur integriert.

In einem weiteren Ausführungsbeispiel ist die Abschleppvorrichtung in einer Längsrichtung des Fahrerhauses (d. h. des Nutzfahrzeugs) direkt durch einen oder mehrere Längsträger der Fahrerhaustragstruktur abgestützt. Dadurch können beispielsweise beim Abschleppen auftretende Kräfte durch die Längsträger günstig zu einer Rückseite der Fahrerhaustragstruktur geleitet werden.

Erfindungsgemäss ist die mindestens eine Abschleppvorrichtung in einer Fahrerhausbodenstruktur der Fahrerhaustragstruktur integriert. Hiermit kann eine doppelte Funktionsintegration durch die Fahrerhausbodenstruktur erfolgen, da diese einerseits einen Boden des Fahrerhauses bildet und anderseits die Abschleppvorrichtung aufnimmt.

In einem weiteren Ausführungsbeispiel ist die mindestens eine Abschleppvorrichtung in einem Unterfahrschutz integriert, der in der Fahrerhaustragstruktur, vorzugsweise einer Fahrerhausbodentragstruktur der Fahrerhaustragstruktur, integriert ist. Hiermit kann eine doppelte Funktionsintegration durch den Unterfahrschutz erfolgen, da dieser einerseits als frontseitiger Unterfahrschutz des Nutzfahrzeugs wirkt und andererseits die Abschleppvorrichtung aufnimmt. Bei Integration des Unterfahrschutzes in die Fahrerhausbodenstruktur erfolgt sogar eine dreifache Funktionsintegration.

In einem weiteren Ausführungsbeispiel ist die mindestens eine Abschleppvorrichtung in einer Fahrerhausvorderwandstruktur der Fahrerhaustragstruktur integriert. Hiermit kann eine doppelte Funktionsintegration durch die Fahrerhausvorderwandstruktur erfolgen, da diese einerseits einen Vorderwandbereich des Fahrerhauses bildet und anderseits die Abschleppvorrichtung aufnimmt.

In einem weiteren Ausführungsbeispiel ist die mindestens eine Abschleppvorrichtung bezüglich einer Querrichtung des Fahrerhauses (d. h. des Nutzfahrzeugs) mittig oder außermittig in die Fahrerhaustragstruktur integriert. Alternativ oder zusätzlich weist die mindestens eine Abschleppvorrichtung zwei oder mehr Abschleppvorrichtungen auf, die zueinander symmetrisch oder asymmetrisch in die Fahrerhaustragstruktur integriert sind.

In einem weiteren Ausführungsbeispiel weist die Fahrerhaustragstruktur eine Fahrerhausbodenstruktur, eine Fahrerhausvorderwandstruktur, eine Fahrerhausrückwandstruktur, eine Fahrerhausdachstruktur und/oder Fahrerhausseitenwandstrukturen auf.

In einem weiteren Ausführungsbeispiel ist die Fahrerhaustragstruktur (z. B. die Fahrerausvorderwandstruktur, die Fahrerhausbodenwandstruktur und/oder die Fahrerhausrückwandstruktur usw. der Fahrerhaustragstruktur) selbsttragend. Alternativ oder zusätzlich ist die Fahrerhaustragstruktur (z. B. die Fahrerausvorderwandstruktur, die Fahrerhausbodenwandstruktur und/oder die Fahrerhausrückwandstruktur usw. der Fahrerhaustragstruktur) als eine Gitterrahmenkonstruktion (z. B. mit in Knotenpunkten verbundenen Metallprofilelementen) und/oder eine Blechkonstruktion ausgebildet.

In einem weiteren Ausführungsbeispiel ist die Fahrerhaustragstruktur starr und/oder nicht-federnd gelagert (z. B. an einer Rückseite der Fahrerhaustragstruktur und/oder an einem Fahrzeughauptrahmen des Nutzfahrzeugs, z. B. einem Leiterrahmen). Die starre Anbindung ermöglicht einen günstigen Kraftfluss beim Übergang in die Lagerung, die bei einer federnden Lagerung ggf. so gar nicht möglich wäre.

In einem weiteren Ausführungsbeispiel weist die Fahrerhaustragstruktur einen Bodenabstand kleiner oder gleich ca. 50 cm, kleiner oder gleich ca. 45 cm, kleiner oder gleich ca. 40 cm und/oder kleiner oder gleich ca. 35 cm auf. Alternativ oder zusätzlich begrenzt die Fahrerhaustragstruktur, vorzugsweise eine Fahrerhausbodenstruktur der Fahrerhaustragstruktur, das Nutzfahrzeug bodenseitig. Der geringe Bodenabstand, der so bei herkömmlich federnd gelagerten Fahrerhäusern nicht vorhanden ist, kann die bodennahe Integration der Abschleppvorrichtung in die Fahrerhaustragstruktur ggf. erst ermöglichen.

Beispielsweise kann das Nutzfahrzeug ohne frontseitige Antriebsmaschine, z. B. Verbrennungskraftmaschine, ausgebildet sein. Zweckmäßig kann unter der Fahrerhaustragstruktur keine Verbrennungskraftmaschine angeordnet sein.

In einem weiteren Ausführungsbeispiel ist die Fahrerhaustragstruktur in einem Integrationsbereich der mindestens einen Abschleppvorrichtung verstärkt (z. B. je nach Anforderung, z. B. mittels Blechprofilen o. ä.).

In einem weiteren Ausführungsbeispiel ist die Fahrerhaustragstruktur in einer Kraftflussrichtung beim Abschleppen ausgehend von der mindestens einen Abschleppvorrichtung verstärkt (zum Beispiel mittels zusätzlicher Längsträger und/oder Versteifungsbleche, die in die Fahrerhaustragstruktur, zum Beispiel die Fahrerhausbodenstruktur der Fahrerhaustragstruktur, integriert sind, z. B. auf Höhe der mindestens einen Abschleppvorrichtung).

In einem weiteren Ausführungsbeispiel ist die Fahrerhaustragstruktur vorzugsweise rückseitig und/oder vorzugsweise starr an einer Fahrerhausrückwandstruktur der Fahrerhaustragstruktur an einem Fahrzeughauptrahmen (z. B. einen Leiterrahmen) abgestützt (z. B. direkt oder indirekt). Alternativ oder zusätzlich ist die Fahrerhaustragstruktur vorzugsweise rückseitig und/oder vorzugsweise starr an einer Fahrerhausbodenstruktur der Fahrerhaustragstruktur an einem Fahrzeughauptrahmen (z. B. einen Leiterrahmen) abgestützt. Damit kann ein Kraftfluss beim Abschleppen von einer Vorderseite der Fahrerhaustragstruktur ausgehend von der Abschleppvorrichtung zu einer Rückseite der Fahrerhaustragstruktur bestehen, um die Kräfte in den Fahrzeughauptrahmen einzuleiten.

In einer Weiterbildung ist die mindestens eine Abschleppvorrichtung zur Verbindung mit einer Abschleppöse ausgebildet und/oder die mindestens eine Abschleppvorrichtung ist als ein Gewindeloch, vorzugsweise für eine Abschleppöse, ausgebildet. Es sind allerdings auch andere Konfigurationen für die Abschleppvorrichtung denkbar, z. B. in Form eines Fangmauls mit Vorsteckbolzen.

Die Erfindung betrifft auch ein Nutzfahrzeug, vorzugsweise einen Lastkraftwagen. Das Nutzfahrzeug weist ein Fahrerhaus wie hierin offenbart auf. Das Nutzfahrzeug weist ferner einen Fahrzeughauptrahmen, vorzugsweise einen Leiterrahmen, auf, an dem die Fahrerhaustragstruktur, vorzugsweise starr, abgestützt ist. Vorzugsweise ist die Fahrerhaustragstruktur so ausgebildet, dass beim Abschleppen des Nutzfahrzeugs über die mindestens eine Abschleppvorrichtung ein Kraftfluss von der mindestens einen Abschleppvorrichtung (z. B. direkt) zu der Fahrerhaustragstruktur und/oder von der Fahrerhaustragstruktur (z. B. direkt oder indirekt) zu dem Fahrzeughauptrahmen erfolgt.

In einer Weiterbildung erfolgt der Kraftfluss durch die Fahrerhaustragstruktur über eine Fahrerhausbodenstruktur der Fahrerhaustragstruktur.

In einem weiteren Ausführungsbeispiel weist das Nutzfahrzeug ferner mindestens eine Fahrerhausbefestigungskonsole auf, die die Fahrerhaustragstruktur, vorzugsweise starr, an dem Fahrzeughauptrahmen abstützt. Vorzugsweise sind die Fahrerhaustragstruktur und/oder die mindestens eine Fahrerhausbefestigungskonsole so ausgebildet und/oder miteinander verbunden, dass beim Abschleppen des Nutzfahrzeugs über die mindestens eine Abschleppvorrichtung ein Kraftfluss von der mindestens einen Abschleppvorrichtung (z. B. direkt) zu der Fahrerhaustragstruktur und/oder von der Fahrerhaustragstruktur (z. B. direkt oder indirekt) zu der mindestens einen Fahrerhausbefestigungskonsole und/oder von der mindestens einen Fahrerhausbefestigungskonsole (z. B. direkt oder indirekt) zu dem Fahrzeughauptrahmen erfolgt.

Es ist auch möglich, die Erfindung bei anderen Nutzfahrzeugen als bei Lastkraftwagen zu verwenden, z. B. bei einem Omnibus.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigt:

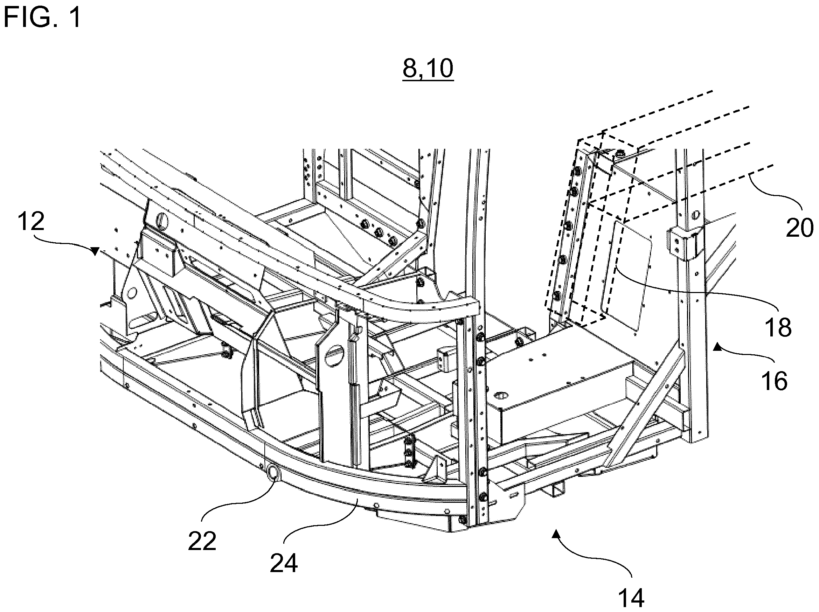

- Figur 1: eine perspektivische Ansicht eines Ausschnitts einer Fahrerhaustragstruktur eines Nutzfahrzeugs gemäß der vorliegenden Offenbarung.

In Figur 1 ist eine Fahrerhaustragstruktur 10 für ein Nutzfahrzeug (nicht in weiterem Detail dargestellt), vorzugsweise einen Lastkraftwagen, abschnittsweise dargestellt. Die Fahrerhaustragstruktur 10 dient zum Bilden eines Fahrerhauses 8 des Nutzfahrzeugs, das in Figur 1 vollkommen ohne Ausstattung mit Einbauten und Verkleidungsteilen und lediglich in Form der Fahrerhaustragstruktur 10 dargestellt ist.. Insbesondere bildet die Fahrerhaustragstruktur 10 einen teilweisen oder vollständigen Fahrerhausrohbau für das Fahrerhaus 8 des Nutzfahrzeugs. In und an den Fahrerhausrohbau werden beispielsweise Innen- und Außenverkleidungsteile sowie Innen- und Außenausstattungskomponenten (Lenkrad, Lenkwelle, Instrumententafel, Pedalerie, Sitze, Lüftungskomponenten, Leitungen, Windschutzscheibe, Seitenscheiben und/oder Außenspiegel usw.) zum Bilden des Fahrerhauses 8 des Nutzfahrzeugs montiert.

Die Fahrerhaustragstruktur 10 kann eine Fahrerhausvorderwandstruktur 12, eine Fahrerhausbodenstruktur 14, eine Fahrerhausrückwandstruktur 16 sowie Fahrerhausseitenwandstrukturen und/oder eine Fahrerhausdachstruktur aufweisen. Die Fahrerhausvorderwandstruktur 12 bildet eine Vorderseite des Fahrerhauses und der Fahrerhaustragstruktur 10. Die Fahrerhausbodenstruktur 14 bildet eine Unterseite oder Bodenseite des Fahrerhauses und der Fahrerhaustragstruktur 10. Die Fahrerhausrückwandstruktur 16 bildet eine Rückseite des Fahrerhauses und der Fahrerhaustragstruktur 10.

Die Fahrerhaustragstruktur 10 ist selbsttragend. Vorzugsweise ist die Fahrerhaustragstruktur 10, vorzugsweise die Fahrerhausvorderwandstruktur 12, die Fahrerhausbodenstruktur 14, die Fahrerhausrückwandstruktur 16, die Fahrerhausseitenwandstrukturen und/oder die Fahrerhausdachstruktur, als eine Gitterrahmenkonstruktion gebildet, wie dargestellt ist. Die Gitterrahmenkonstruktion kann eine Mehrzahl von offenen und/oder geschlossenen Profilen aufweisen, die in Knotenpunkt fest miteinander verbunden, d. h. gefügt, sind, zum Beispiel mittels Verschweißen, Verkleben, Verschrauben, Verformen usw. Es ist auch möglich, dass die Fahrerhaustragstruktur oder einzelne Strukturelemente davon alternativ oder zusätzlich als eine Blechkonstruktion ausgebildet ist, zum Beispiel mit Versteifungsblechen.

In der gezeigten, beispielhaften Ausführungsform ist die Fahrerhaustragstruktur 10 für ein Nutzfahrzeug ohne frontseitige Verbrennungskraftmaschine ausgebildet, die herkömmlich unter einer Fahrerhaustragstruktur angeordnet wäre. Stattdessen ist die Fahrerhaustragstruktur 10 bodennah mit einem Bodenabstand von beispielsweise rund 35 cm angeordnet. Die Fahrerhaustragstruktur 10, vorzugsweise die Fahrerhausbodenstruktur 14, grenzt das Nutzfahrzeug zum Boden hin ab. Mit anderen Worten gesagt, unterhalb der Fahrerhaustragstruktur 10 und insbesondere der Fahrerhausbodenstruktur 14 sind keine tragenden Teile eines Fahrzeugrahmens angeordnet. Ferner ist unterhalb der Fahrerhaustragstruktur 10 beispielsweise keine Antriebseinrichtung, wie eine Verbrennungskraftmaschine, angeordnet. Die Antriebseinrichtung des Nutzfahrzeugs, die beispielsweise eine Elektro-Antriebseinrichtung sein kann, ist stattdessen an einer anderen Position des Nutzfahrzeugs angeordnet.

Damit sitzt die Fahrerhaustragstruktur 10 nicht, wie üblich, auf einem Fahrzeugrahmen auf und ist auch nicht-federnd auf dem Fahrzeugrahmen gelagert. Stattdessen ist die Fahrerhaustragstruktur 10 rückseitig starr über eine oder mehrere Befestigungskonsolen 18 an einem Fahrzeughauptrahmen 20 gelagert. In Figur 1 ist rein beispielhaft eine Befestigungskonsole 18 und ein Längsträger des Fahrzeughauptrahmens 20 schematisch gestrichelt dargestellt. Vorzugsweise erfolgt die rückseitige starre Anbindung über die Fahrerhausrückwandstruktur 16 und optional zusätzlich über die Fahrerhausbodenstruktur 14. Das Fahrerhaus 8 des Nutzfahrzeugs ist somit in einer niedrigen, hinsichtlich eines Einstiegs optimierten Position angeordnet. Der Fahrzeughauptrahmen 20 kann beispielsweise als ein Leiterrahmen mit zwei parallelen Hauptlängsträgern und einer Mehrzahl von die Hauptlängsträger verbindenden Querträgern ausgebildet sein.

Die Fahrerhaustragstruktur 10 weist eine Abschleppvorrichtung 22 auf. Die Abschleppvorrichtung 22 ist direkt in die Fahrerhaustragstruktur 10 integriert. Beispielsweise kann die Abschleppvorrichtung 22 direkt in die Fahrerhaustragstruktur 10 gefertigt, zum Beispiel direkt eingebohrt, eingeschweißt, eingeklebt usw., sein. Die Abschleppvorrichtung 22 kann insbesondere als ein Gewindeloch zur Verbindung mit einer Abschleppöse (nicht dargestellt) ausgebildet sein.

In der dargestellten Ausführungsform ist die Abschleppvorrichtung 22 in die Fahrerhausbodenstruktur 14 integriert, insbesondere an einer Vorderseite der Fahrerhausbodenstruktur 14. Im Einzelnen weist die Fahrerhausbodenstruktur 14 an einer Vorderseite einen Unterfahrschutz 24 auf, der in die Fahrerhausbodenstruktur 14 integriert ist. Der Unterfahrschutz 24 bildet eine frontseitige Querträgerkonstruktion der Fahrerhausbodenstruktur 14. Die Abschleppvorrichtung 22 ist außermittig, zum Beispiel an einer Fahrerseite oder einer Beifahrerseite, in den Unterfahrschutz 24 integriert, zum Beispiel direkt eingearbeitet. Es ist beispielsweise auch möglich, die Abschleppvorrichtung 22 an einer anderen Stelle der Fahrerhaustragstruktur zu integrieren, zum Beispiel an einer geeigneten Stelle der Fahrerhausvorderwandstruktur 12. Damit ist die Abschleppvorrichtung 22 bauraumgünstig und ohne Vorsehen zusätzlicher Komponenten, die zusätzlichen Bauraum beanspruchen und zusätzliches Gewicht verursachen, angeordnet.

Die Abschleppvorrichtung 22 ermöglicht, dass das Nutzfahrzeug im Bedarfsfall abgeschleppt werden kann. Um das Nutzfahrzeug abzuschleppen, kann eine abschlepperseitige Abschleppeinrichtung (nicht dargestellt) mit der nutzfahrzeugseitigen Abschleppvorrichtung 22 verbunden werden. Zum Beispiel kann eine Abschleppöse in die Abschleppvorrichtung 22 eingeschraubt werden. Beim Abschleppen erfolgt dann eine direkte Einleitung der beim Abschleppen entstehenden Kräfte aus der Abschleppvorrichtung 22 in die Fahrerhaustragstruktur 10. Insbesondere werden in der dargestellten Ausführungsform die Kräfte von der Abschleppvorrichtung 22 direkt in den Unterfahrschutz 24 eingeleitet. Der Kraftfluss erfolgt dann durch die Fahrerhaustragstruktur 10, insbesondere die Fahrerhausbodenstruktur 14, in einer Längsrichtung des Nutzfahrzeugs zu einer Rückseite der Fahrerhaustragstruktur 10. Beispielsweise weist die Fahrerhaustragstruktur 10, insbesondere die Fahrerhausbodenstruktur 14, einen oder eine Mehrzahl von Längsträgern auf, die die Abschleppvorrichtung 22 in einer Längsrichtung des Nutzfahrzeugs direkt nach vorne abstützen und einen Kraftfluss in einer Richtung zur Rückseite der Fahrerhaustragstruktur 10 ermöglichen. Von der Rückseite der Fahrerhaustragstruktur 10 werden die Kräfte rückseitig von der Fahrerhausbodenstruktur 14 und der Fahrerhausrückwandstruktur 16 in die eine oder mehreren Befestigungskonsolen 18 eingeleitet. Die mindestens eine Befestigungskonsole 18 leitet die Kräfte dann in den Fahrzeughauptrahmen 20, insbesondere die Hauptlängsträger des Fahrzeughauptrahmens 20, ein.

Um einen sicheren Kraftfluss zu gewährleisten, ist die Fahrerhaustragstruktur 10 somit insbesondere derart ausgebildet, dass die auftretenden Abschleppkräfte, die beispielsweise bis zu 2/3 des Nutzfahrzeuggewichtes samt Ladung betragen können und auch einen Schrägzug, das heißt Vertikal- und Querkomponenten aufweisen können, ohne Deformation durch die Fahrerhaustragstruktur 10 geleitet werden können. Es ist möglich, dass die Fahrerhaustragstruktur 10 entlang eines Kraftflussweges von der Abschleppvorrichtung 22 hin zur starren Lagerung der Fahrerhaustragstruktur 10 , das heißt insbesondere in einer Längsrichtung des Nutzfahrzeugs, verstärkt ausgeführt ist, zum Beispiel durch Vorsehen zusätzlicher Längsträger und/oder Versteifungsbleche.

Es ist auch möglich, dass die Fahrerhaustragstruktur 10 an einer Position, an der die Abschleppvorrichtung 22 in die Fahrerhaustragstruktur 10 integriert ist, verstärkt ist. Zum Beispiel können zur Verstärkung der Fahrerhaustragstruktur im Integrationsbereich der Abschleppvorrichtung 22 zusätzliche Bleche und/oder Profile vorgesehen sein, je nach Bedarf und Anforderung.

Es ist möglich, dass mehrere Abschleppvorrichtung 22 in die Fahrerhaustragstruktur 10 integriert sind, zum Beispiel mittig oder außermittig und/oder symmetrisch oder asymmetrisch zueinander. Zum Beispiel können zwei Abschleppvorrichtungen 22 außermittig an dem Unterfahrschutz 24 angeordnet sein, zum Beispiel spiegelsymmetrisch bezüglich einer Mittelvertikallängsebene des Nutzfahrzeugs.

Die Erfindung ist nicht auf die vorstehend beschriebenen bevorzugten Ausführungsbeispiele beschränkt. Der Schutzumfang wird durch die Ansprüche bestimmt.

### Bezugszeichenliste

- 8: Fahrerhaus
- 10: Fahrerhaustragstruktur
- 12: Fahrerhausvorderwandstruktur
- 14: Fahrerhausbodenstruktur
- 16: Fahrerhausrückwandstruktur
- 18: Befestigungskonsole
- 20: Fahrzeughauptrahmen
- 22: Abschleppvorrichtung
- 24: Unterfahrschutz

## Patentansprüche

1. Fahrerhaus (8) für ein Nutzfahrzeug, vorzugsweise einen Lastkraftwagen, aufweisend:
eine Fahrerhaustragstruktur (10), die zumindest teilweise einen Rohbau des Fahrerhauses (8) bildet; und
mindestens eine Abschleppvorrichtung (22), die in die Fahrerhaustragstruktur (10) integriert ist, vorzugsweise an einer Vorderseite der Fahrerhaustragstruktur (10), **dadurch gekennzeichnet, dass**
die mindestens eine Abschleppvorrichtung (22) in einer Fahrerhausbodenstruktur (14) der Fahrerhaustragstruktur (10) integriert ist.

2. Fahrerhaus (8) nach Anspruch 1, wobei:
die mindestens eine Abschleppvorrichtung (22) in einer Querträgerkonstruktion der Fahrerhaustragstruktur (10) integriert ist; und/oder
die Abschleppvorrichtung (22) in einer Längsrichtung des Fahrerhauses direkt durch einen oder mehrere Längsträger der Fahrerhaustragstruktur (10) abgestützt ist.

3. Fahrerhaus (8) nach Anspruch 1 oder Anspruch 2, wobei:
die mindestens eine Abschleppvorrichtung (22) in einem Unterfahrschutz (24) integriert ist, der in der Fahrerhaustragstruktur (10), vorzugsweise einer Fahrerhausbodentragstruktur (14) der Fahrerhaustragstruktur (10), integriert ist.

4. Fahrerhaus (8) nach einem der vorherigen Ansprüche, wobei:
die mindestens eine Abschleppvorrichtung (22) in einer Fahrerhausvorderwandstruktur (12) der Fahrerhaustragstruktur (10) integriert ist.

5. Fahrerhaus (8) nach einem der vorherigen Ansprüche, wobei:
die mindestens eine Abschleppvorrichtung (22) bezüglich einer Querrichtung des Fahrerhauses mittig oder außermittig in die Fahrerhaustragstruktur (10) integriert ist; und/oder
die mindestens eine Abschleppvorrichtung (22) zwei oder mehr Abschleppvorrichtungen aufweist, die zueinander symmetrisch oder asymmetrisch in die Fahrerhaustragstruktur (10) integriert sind.

6. Fahrerhaus (8) nach einem der vorherigen Ansprüche, wobei:
die Fahrerhaustragstruktur (10) eine Fahrerhausbodenstruktur (14), eine Fahrerhausvorderwandstruktur (12), eine Fahrerhausrückwandstruktur (16), eine Fahrerhausdachstruktur und/oder Fahrerhausseitenwandstrukturen aufweist.

7. Fahrerhaus (8) nach einem der vorherigen Ansprüche, wobei:
die Fahrerhaustragstruktur (10) selbsttragend ist; und/oder
die Fahrerhaustragstruktur (10) als eine Gitterrahmenkonstruktion und/oder eine Blechkonstruktion ausgebildet ist.

8. Fahrerhaus (8) nach einem der vorherigen Ansprüche, wobei:
die Fahrerhaustragstruktur (10) starr und/oder nicht-federnd gelagert ist; und/oder
die Fahrerhaustragstruktur (10) einen Bodenabstand kleiner oder gleich 50 cm, kleiner oder gleich 45 cm, kleiner oder gleich 40 cm und/oder kleiner oder gleich 35 cm aufweist;
die Fahrerhaustragstruktur (10), vorzugsweise eine Fahrerhausbodenstruktur (14) der Fahrerhaustragstruktur (10) das Nutzfahrzeug bodenseitig begrenzt.

9. Fahrerhaus (8) nach einem der vorherigen Ansprüche, wobei:
die Fahrerhaustragstruktur (10) in einem Integrationsbereich der mindestens einen Abschleppvorrichtung (22) verstärkt ist; und/oder
die Fahrerhaustragstruktur (10) in einer Kraftflussrichtung beim Abschleppen ausgehend von der Abschleppvorrichtung (22) verstärkt ist.

10. Fahrerhaus (8) nach einem der vorherigen Ansprüche, wobei:
die Fahrerhaustragstruktur (10) rückseitig, vorzugsweise starr, an einer Fahrerhausrückwandstruktur (16) der Fahrerhaustragstruktur (10) an einem Fahrzeughauptrahmen (20) abgestützt ist; und/oder
die Fahrerhaustragstruktur (10) rückseitig, vorzugsweise starr, an einer Fahrerhausbodenstruktur (14) der Fahrerhaustragstruktur (10) an einem Fahrzeughauptrahmen (20) abgestützt ist.

11. Fahrerhaus (8) nach einem der vorherigen Ansprüche, wobei:
die mindestens eine Abschleppvorrichtung (22) zur Verbindung mit einer Abschleppöse ausgebildet ist; und/oder
die mindestens eine Abschleppvorrichtung (22) als ein Gewindeloch, vorzugsweise für eine Abschleppöse, ausgebildet ist.

12. Nutzfahrzeug, vorzugsweise Lastkraftwagen, aufweisend:
ein Fahrerhaus (8) nach einem der vorherigen Ansprüche; und
einen Fahrzeughauptrahmen (20), vorzugsweise einen Leiterrahmen, an dem die Fahrerhaustragstruktur (10), vorzugsweise starr, abgestützt ist,
wobei vorzugsweise:
die Fahrerhaustragstruktur (10) so ausgebildet ist, dass beim Abschleppen des Nutzfahrzeugs über die mindestens eine Abschleppvorrichtung (22) ein Kraftfluss von der mindestens einen Abschleppvorrichtung (22) zu der Fahrerhaustragstruktur (10) und von der Fahrerhaustragstruktur (10) zu dem Fahrzeughauptrahmen (20) erfolgt.

13. Nutzfahrzeug nach Anspruch 12, wobei:
der Kraftfluss durch die Fahrerhaustragstruktur (10) über eine Fahrerhausbodenstruktur (14) der Fahrerhaustragstruktur (10) erfolgt.

14. Nutzfahrzeug nach Anspruch 12 oder Anspruch 13, ferner aufweisend:
mindestens eine Fahrerhausbefestigungskonsole (18), die die Fahrerhaustragstruktur (10), vorzugsweise starr, an dem Fahrzeughauptrahmen (20) abstützt,
wobei die Fahrerhaustragstruktur (10) und die mindestens eine Fahrerhausbefestigungskonsole (18) so ausgebildet und miteinander verbunden sind, dass beim Abschleppen des Nutzfahrzeugs über die mindestens eine Abschleppvorrichtung (22) ein Kraftfluss von der mindestens einen Abschleppvorrichtung (22) zu der Fahrerhaustragstruktur (10) und von der Fahrerhaustragstruktur (10) zu der mindestens einen Fahrerhausbefestigungskonsole (18) und von der mindestens einen Fahrerhausbefestigungskonsole (18) zu dem Fahrzeughauptrahmen (20) erfolgt.

## Claims

1. A cab (8) for a utility vehicle, preferably a truck, comprising:
a cab support structure (10) which at least partially forms a body shell of the cab (8); and
at least one towing device (22) which is integrated into the cab support structure (10), preferably on a front side of the cab support structure (10),
**characterized in that**
the at least one towing device (22) is integrated in a cab floor structure (14) of the cab support structure (10).

2. The cab (8) according to claim 1, wherein:
the at least one towing device (22) is integrated in a cross member structure of the cab support structure (10); and/or
the towing device (22) is directly supported in a longitudinal direction of the cab by one or more longitudinal support members of the cab support structure (10).

3. The cab (8) according to claim 1 or claim 2, wherein:
the at least one towing device (22) is integrated in an underride guard (24) which is integrated in the cab support structure (10), preferably a cab floor support structure (14) of the cab support structure (10).

4. The cab (8) according to any of the previous claims, wherein:
the at least one towing device (22) is integrated in a cab front wall structure (12) of the cab support structure (10).

5. The cab (8) according to any of the previous claims, wherein:
the at least one towing device (22) is integrated centrally or off-center in the cab support structure (10) with respect to a transverse direction of the cab; and/or
the at least one towing device (22) comprises two or more towing devices which are integrated symmetrically or asymmetrically with respect to each other in the cabsupporting structure (10).

6. The cab (8) according to any of the previous claims, wherein:
the cab support structure (10) comprises a cab floor structure (14), a cab front wall structure (12), a cab rear wall structure (16), a cab roof structure and/or cab side wall structures.

7. The cab (8) according to any of the previous claims, wherein:
the cab support structure (10) is self-supporting; and/or
the cab support structure (10) is configured as a lattice frame structure and/or a sheet metal structure.

8. The cab (8) according to any of the previous claims, wherein:
the cab support structure (10) is rigidly and/or non-resiliently mounted; and/or
the cab support structure (10) comprises a floor clearance of less than or equal to 50 cm, less than or equal to 45 cm, less than or equal to 40 cm and/or less than or equal to 35 cm;
the cab support structure (10), preferably a cab floor structure (14) of the cab support structure (10), delimits the utility vehicle on the floor side.

9. The cab (8) according to any of the previous claims, wherein:
the cab support structure (10) is reinforced in an integration area of the at least one towing device (22); and/or
the cab support structure (10) is reinforced in a direction of force flow during towing starting from the towing device (22).

10. The cab (8) according to any of the previous claims, wherein:
the cab support structure (10) is supported at the rear, preferably rigidly, on a cab rear wall structure (16) of the cab support structure (10) on a vehicle main frame (20); and/or
the cab support structure (10) is supported at the rear, preferably rigidly, on a cab floor structure (14) of the cab support structure (10) on a vehicle main frame (20).

11. The cab (8) according to any of the previous claims, wherein:
the at least one towing device (22) is configured to be connected to a towing eye; and/or
the at least one towing device (22) is configured as a threaded hole, preferably for a towing eye.

12. A utility vehicle, preferably a truck, comprising:
a cab (8) according to any of the previous claims; and
a vehicle main frame (20), preferably a ladder frame, on which the cab support structure (10) is supported, preferably rigidly,
wherein preferably:
the cab support structure (10) is configured such that, when the utility vehicle is towed, a force flow via the at least one towing device (22) takes place from the at least one towing device (22) to the cab support structure (10) and from the cab support structure (10) to the vehicle main frame (20).

13. The utility vehicle according to claim 12, wherein:
the force flow through the cab support structure (10) takes place via a cab floor structure (14) of the cab support structure (10).

14. The utility vehicle according to claim 12 or claim 13, further comprising:
at least one cab mounting bracket (18) which supports the cab support structure (10), preferably rigidly, on the vehicle main frame (20),
wherein the cab support structure (10) and the at least one cab mounting bracket (18) are configured and connected to one another in such a way that when the utility vehicle is towed away, a force flow via the at least one towing device (22) takes place from the at least one towing device (22) to the cab support structure (10) and from the cab support structure (10) to the at least one cab mounting bracket (18) and from the at least one cab mounting bracket (18) to the vehicle main frame (20).

## Revendications

1. Cabine de conduite (8) pour un véhicule utilitaire, de préférence un camion, comprenant :
une structure (10) de support de cabine de conduite, qui constitue au moins partiellement une structure brute de la cabine de conduite (8) ; et
au moins un dispositif de remorquage (22) qui est intégré dans la structure (10) de support de cabine de conduite, de préférence sur un côté avant de la structure (10) de support de cabine de conduite,
**caractérisé en ce que**
ledit au moins un dispositif de remorquage (22) est intégré dans une structure (14) de plancher de cabine de la structure (10) de support de cabine de conduite.

2. Cabine de conduite (8) selon la revendication 1, dans laquelle :
ledit au moins un dispositif de remorquage (22) est intégré dans une construction transversale de la structure (10) de support de cabine de conduite ; et/ou le dispositif de remorquage (22) est directement supporté dans une direction longitudinale de la cabine de conduite par un ou plusieurs longerons de la structure (10) de support de cabine de conduite.

3. Cabine de conduite (8) selon la revendication 1 ou la revendication 2, dans laquelle :
ledit au moins un dispositif de remorquage (22) est intégré dans un dispositif anti-encastrement (24) qui est intégré dans la structure (10) de support de cabine de conduite, de préférence une structure (14) de support du plancher de cabine de la structure (10) de support de cabine de conduite.

4. Cabine de conduite (8) selon l'une des revendications précédentes, dans laquelle :
ledit au moins un dispositif de remorquage (22) est intégré dans une structure (12) de paroi avant de cabine de la structure (10) de support de cabine de conduite.

5. Cabine de conduite (8) selon l'une des revendications précédentes, dans laquelle :
ledit au moins un dispositif de remorquage (22) est intégré de manière centrale ou excentrée par rapport à une direction transversale de la cabine de conduite dans la structure (10) de support de cabine de conduite ; et/ou
ledit au moins un dispositif de remorquage (22) comprend deux ou plusieurs dispositifs de remorquage qui sont intégrés dans la structure (10) de support de cabine de conduite de manière symétrique ou asymétrique les uns par rapport aux autres.

6. Cabine de conduite (8) selon l'une des revendications précédentes, dans laquelle :
la structure (10) de support de cabine de conduite comprend une structure (14) de plancher de cabine, une structure (12) de paroi avant de cabine, une structure (16) de paroi arrière de cabine, une structure de toit de cabine et/ou des structures de parois latérales de cabine.

7. Cabine de conduite (8) selon l'une des revendications précédentes, dans laquelle :
la structure (10) de support de cabine de conduite est autoportante ; et/ou
la structure (10) de support de cabine de conduite est réalisée sous la forme d'une construction de bâti en treillis et/ou d'une construction en tôle.

8. Cabine de conduite (8) selon l'une des revendications précédentes, dans laquelle :
la structure (10) de support de cabine de conduite est montée de manière rigide et/ou non élastique ; et/ou la structure (10) de support de cabine de conduite présente une distance au sol inférieure ou égale à 50 cm, inférieure ou égale à 45 cm, inférieure ou égale à 40 cm et/ou inférieure ou égale à 35 cm ;
la structure (10) de support de cabine de conduite, de préférence une structure (14) de plancher de cabine de la structure (10) de support de cabine de conduite, délimite le véhicule utilitaire du côté du plancher.

9. Cabine de conduite (8) selon l'une des revendications précédentes, dans laquelle :
la structure (10) de support de cabine de conduite est renforcée dans une zone d'intégration dudit au moins un dispositif de remorquage (22) ; et/ou
la structure (10) de support de cabine de conduite est renforcée dans une direction de flux de force lors du remorquage à partir du dispositif de remorquage (22).

10. Cabine de conduite (8) selon l'une des revendications précédentes, dans laquelle :
la structure (10) de support de cabine de conduite est supportée à l'arrière, de préférence de manière rigide, sur une structure (16) de paroi arrière de cabine de la structure (10) de support de cabine de conduite sur un châssis principal (20) de véhicule ; et/ou
la structure (10) de support de cabine de conduite est supportée à l'arrière, de préférence de manière rigide, par une structure (14) de plancher de cabine de la structure (10) de support de cabine de conduite sur un châssis principal (20) de véhicule.

11. Cabine de conduite (8) selon l'une des revendications précédentes, dans laquelle :
ledit au moins un dispositif de remorquage (22) est conçu pour être relié à un anneau de remorquage ; et/ou ledit au moins un dispositif de remorquage (22) est conçu comme un trou taraudé, de préférence pour un anneau de remorquage.

12. Véhicule utilitaire, de préférence un camion, comprenant :
une cabine de conduite (8) selon l'une des revendications précédentes ; et
un châssis principal (20) de véhicule, de préférence un châssis en échelle, sur lequel la structure (10) de support de cabine de conduite est supportée, de préférence de manière rigide,
dans lequel, de préférence :
la structure (10) de support de cabine de conduite est conçue de telle sorte que, lors du remorquage du véhicule utilitaire par ledit au moins un dispositif de remorquage (22), un flux de force s'exerce dudit au moins un dispositif de remorquage (22) vers la structure (10) de support de cabine de conduite et de la structure (10) de support de cabine de conduite vers le châssis principal (20) de véhicule.

13. Véhicule utilitaire selon la revendication 12, dans lequel :
le flux de force à travers la structure (10) de support de cabine de conduite s'effectue via une structure (14) de plancher de cabine de la structure (10) de support de cabine de conduite.

14. Véhicule utilitaire selon la revendication 12 ou la revendication 13, comprenant en outre :
au moins une console (18) de fixation de cabine de conduite qui supporte, de préférence de manière rigide, la structure (10) de support de cabine de conduite sur le châssis principal (20) du véhicule,
la structure (10) de support de cabine de conduite et ladite au moins une console (18) de fixation de cabine de conduite étant conçues et reliées entre elles de telle sorte que, lors du remorquage du véhicule utilitaire par ledit au moins un dispositif de remorquage (22), il se produit un flux de force dudit au moins un dispositif de remorquage (22) vers la structure (10) de support de cabine de conduite et de la structure (10) de support de cabine de conduite vers ladite au moins une console (18) de fixation de cabine de conduite et de ladite au moins une console (18) de fixation de cabine de conduite vers le châssis principal (20) de véhicule.
